# EUROPEAN PATENT APPLICATION

(11) **EP 1 182 108 A1**
(43) Date of publication of application: **27.02.2002**
(21) Application number: 01120275.1
(22) Date of filing: 23.08.2001
(51) Int. Cl.: B60T 11/08, B60T 7/06, G05G 7/04, G05G 1/14

(54) **Brake pedal assembly**

(30) Priority: 23.08.2000 GB 0020639
(71) Applicant: J.C. BAMFORD EXCAVATORS LIMITED, Uttoxeter Staffordshire ST14 5JP (GB)
(72) Inventor: Cheetham, Paul, c/o J.C. Bamford Excavators Ltd., Staffordshire ST14 5JP (GB)
(74) Representative: Leach, John Nigel

(57) **Abstract**

A brake pedal assembly comprising a master brake cylinder (15) operable to supply fluid under pressure to a brake, the master brake cylinder (15) comprising a piston (16) connected to a rod (17), the brake assembly further comprising a lever (10) mounted for manual movement about a pivot (13), first engagement means (18) being provided on the rod (17) and second engagement means (19) being provided on the lever (10), the first engagement means (18) and second engagement means (19) being engaged such that the first engagement means (18) is movable relative to the pivot (13) of said lever (10).

## Description

This invention relates to a brake pedal assembly.

Conventionally, brake pedal assemblies for vehicles comprise a lever which is moved by a driver to apply a vehicle brake. The lever is conventionally connected to a piston rod of a master brake cylinder, such that movement of the lever causes movement of a piston within the brake cylinder to displace hydraulic fluid from the cylinder into a brake system to actuate the vehicle brake. The geometry of the lever is conventionally such as to multiply the force supplied by the driver such that a greater force is applied at the master cylinder.

The optimum pressure supplied by the brake lever is not however constant. An initial low pressure is required to take up the clearance in the vehicle brake, whilst a high pressure is required to apply a braking force. Consequently, this means that the ideal geometry to take up clearances in the brake system is not the ideal geometry to apply the braking force. Also, it is conventionally required that the piston in the master cylinder only travel 60% of its full stroke when the vehicle brake is operated, but must be able to travel over the whole of its full stroke in bleeding the brake system.

An aim of the invention is to provide a new or improved brake pedal assembly.

According to the present invention, we provide a brake pedal assembly comprising a master brake cylinder operable to supply fluid under pressure to a brake, the master brake cylinder comprising a piston connected to a rod, the brake assembly further comprising a lever mounted for manual movement about a pivot, first engagement means being provided on the rod and second engagement means being provided on the lever, the first engagement means and second engagement means being engaged such that the first engagement means is movable relative to the pivot of said lever.

The brake pedal assembly may comprise biasing means to bias the first engagement means to a biased position relatively distant from the pivot of said lever and wherein the first engagement means is moveable to a position relatively close to the pivot of the lever.

One of said first engagement means and said second engagement means may comprise a cam follower and the other of said first engagement means and said second engagement means may comprise a cam surface.

Preferably the cam follower comprises a roller.

Preferably the first engagement means comprises said cam follower and the second engagement means comprises said cam surface.

Preferably, said cam surface is disposed transverse to the plane of movement of the lever and is inclined to the longitudinal axis of the rod such that the cam surface has a first part which is relatively close to the master brake cylinder and a second part which is relatively distant from the master brake cylinder such that when the first engagement means is in its biased position, the cam follower is disposed adjacent the first part of the cam surface, and when the first engagement means is disposed away from the biased position, the cam follower is disposed adjacent the second part of the cam surface.

The first engagement means may be displaced from its biased position by virtue of resistance to movement of said rod from fluid pressure within the master brake cylinder.

Preferably, the strength of the biasing means is selected such that said first engagement means remains in its biased position during a first low pressure movement phase and is displaced from the biased position during a second high pressure movement phase.

The strength of the biasing means is preferably selected such that where there is no resistance to movement of said rod from fluid pressure within the master brake cylinder, the first engagement means remains in its biased position.

Preferably, where there is no resistance to movement of the rod due to fluid pressure, the first engagement means remains in its biased position throughout the whole range of movement phase such that the rod may be moved over the full length of its stroke. Where there is resistance to movement of the rod such that the first engagement means is displaced from its biased position, the rod may preferably only be moved over a part of the length of its stroke, most preferably only 60% of the length of its stroke.

Preferably, the master brake cylinder is mounted for pivotal movement to permit movement of the first engagement means relative to the second engagement means.

The invention will now be described by way of example only with reference to the accompanying drawings wherein;

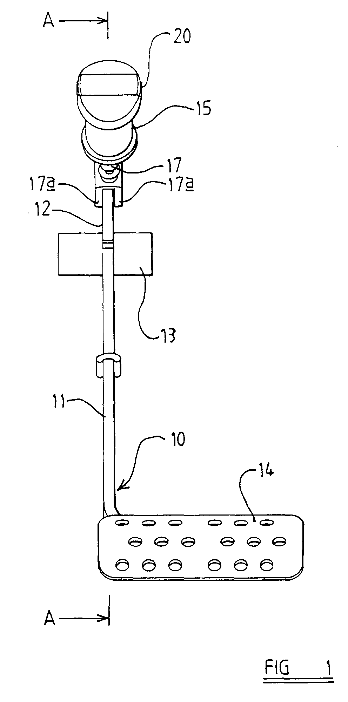

Figure 1 is a front view of a brake pedal assembly according to the present invention,
Figure 2 is a section on line A-A of the brake pedal assembly if Figure 1 in an at rest position, and
Figure 3 is a section on line A-A of the brake pedal assembly of Figure 1 in a braking position.

Referring to the Figures, the brake pedal assembly comprises a lever 10 having a first relatively long part 11 and a second relatively short part 12. Located generally at the junction of the first part 11 and the second part 12 is a pivot 13, which is attached to a fixed point of a vehicle in which the brake pedal assembly 10 is mounted, for example to a bulkhead thereof. At the end of the first part 11 distant from the pivot 13 there is provided a pedal 14 to be operated by a driver to apply the brakes, particular by use of a foot. Disposed generally coplanar with the lever 10 is a brake master cylinder 15 comprising a piston 16 received within the cylinder 15 and slidable relative thereto. Rigidly attached to the piston 16 is a rod 17 extending outwardly of the piston 15. Provided at the free end of the rod 17 is a first engagement means comprising a cam follower in the form of a roller 18 which is rotatably mounted on the piston rod 17 between a pair of arms 17a extending either side of the lever 10. The roller 18 is received in a second engagement means comprising a cam provided by a slot 19 disposed in the second part 12 of the lever 10. The slot 19 in the present is of generally oval shape, the long axis of the oval shape being inclined to a longitudinal axis of the piston rod 17. The edge of the slot 19 disposed away from the cylinder 15 defines a cam surface 19a. The cam surface 19a thus has a first part relatively close to the master brake cylinder 15 and a second part disposed relatively distant from the master brake cylinder 15.

The master brake cylinder 15 is pivotably mounted at one end by a pivot 20 to a further fixed part of a vehicle in which the pedal is provided. The master cylinder 15 is further provided with an inlet 21a to admit fluid from a reservoir (not shown), and an outlet 21b to supply fluid under pressure to a brake system (not shown) to apply one or more brakes of the vehicle. A seal 22 is provided on the piston rod 17, to close the open part of the cylinder 15. A stop means 23 extends inwardly of the cylinder 15 from the piston 16 to limit the range of movement, hereinafter referred to as the stroke, of the piston rod 17 by engaging an end wall 24 of the cylinder 15 when the rod 17 at its maximum stroke.

A resilient biasing means 25 is provided, in the present example comprising a helical spring, attached at one end to a suitable attachment means 26 provided on the rod 17, and attached at the other end 27 to a suitable fixed part of a vehicle in which the pedal is provided. The biasing means 25 acts to maintain the roller 18 in a first position adjacent to the end of the slot 19 distant from the pivot 13.

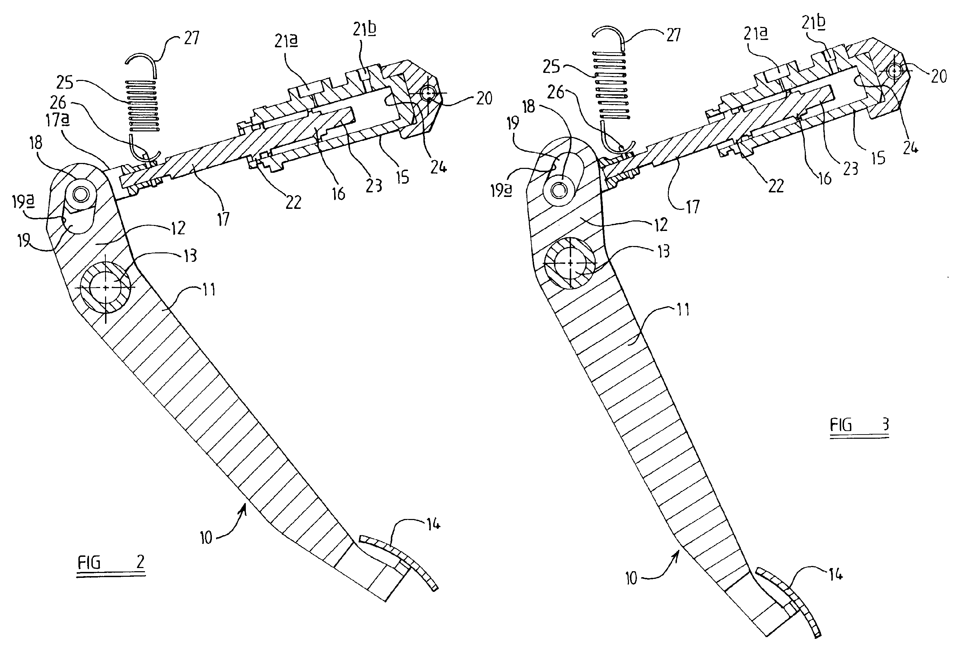

When it is desired to apply the brakes, a force is applied to the pedal 14 to cause the brake lever 10 to move in a clockwise direction as seen in Figures 2 and 3. The cam surface 19a acts on the roller 18 to urge the piston rod 17 and hence the piston 16 inwardly of the cylinder 15. The piston 16 encounters a resistance to movement due to the fluid pressure within the cylinder 15 and brake system generally. The interaction of the force on the brake lever 10, the resistance to movement of the piston 16 and rod 17 and the inclination of the slot 19 to the longitudinal axis of the rod 17 acts to urge the roller 18 to move in the slot 19 along the cam surface 19a in a direction towards the pivot 13, against the force of the biasing means 25.

Over a first part of the range of movement of the lever 10, the strength of the resilient biasing means 25 is sufficient to retain the roller 18 at the end of the slot 19 distant from the pivot 13. Since the roller 18 is disposed relatively distant from the pivot 13, movement of the brake lever 10 in a clockwise direction causes a relatively small fluid pressure increase in the cylinder 15 and hence in the brake system, sufficient to take up any clearance or slack in the brake. As the clearance or slack is taken up and the brake is applied, the resistance to further movement of the piston 16 and rod 17 due to fluid pressure in the cylinder 15 and brake system further increases sufficiently to overcome the resistance of the biasing means 25. The roller 18 is thus displaced along the cam surface 19a of the slot 19 until it reaches the end of the slot 19 relatively close to the pivot 13. Because of the end of the slot 19 is relatively close to pivot 13, a given force on the lever 10 acts on the roller 18 to provide a greater force on the rod 17 and piston 16 than if the roller 18 were disposed at the end of the slot 19 distant from the pivot 13, in accordance with known mechanical principles. As is apparent from Figure 3, the cylinder 15 pivots about the pivot 20 to permit movement of the roller 18 relative to the slot 19. The piston 16 moves past the reservoir inlet 21a to urge fluid under pressure from the outlet 21b.

When the driver reduces the force on the pedal 14, the fluid pressure in the cylinder 15 and the brake system acts on the piston 16 and rod 17 to extend the rod 17 relative to the cylinder 15 and to urge the lever 10 in a generally anticlockwise position back towards the position shown in Figure 2. The resilient biasing means 25 acts to return the roller 18 to the end of the slot 19 distant from the pivot 13. The end of the slot 19 relatively close to the pivot 13 is disposed so that it is relatively distant from the cylinder 15 such that, when the lever 10 has been urged to its full range of movement, the piston rod 17 and hence the piston 16 have only moved over 60% of the length of their full stroke.

When it is desired to bleed the system, the fluid pressure in the brake system is released. There is thus no or relatively little resistance to movement of the piston 16, rod 17 and the lever 10 due to fluid pressure. Thus , when a force is applied to the pedal 14 to cause the lever 10 to move in a clockwise direction about pivot 13 as seen in Figures 2 and 3, the strength of the resilient biasing means 25 is sufficient to maintain the roller 18 at the end of the slot 19 relatively distant from the pivot 13 throughout the range of movement of the lever 10. Since the end of the slot 19 distant from the pivot 13 is relatively close to the cylinder 15, movement of the lever 10 through its full range of movement permits the piston rod 17 and piston 16 to move over the whole of the full stroke, as desired.

The distance the roller 18 moves in the slot 19 is due to the relationship between the force applied to the pedal 14, the strength of the resilient biasing means 25, and the induced fluid pressure in the master cylinder 15. It will be apparent that the force induced in the cylinder 15 over a given part of the range of movement of the lever 10, for a lever of a given geometry, for example, having a given ratio of the lengths of the first part and second part 12, may be varied by selecting a biasing means 25 of a desired strength. Thus, for example a relatively strong biasing means 25 will provide a relatively long range of movement of the lever 10 in which a relatively low pressure is induced in the cylinder 15, whilst a relatively weak resilient biasing means will permit the roller 18 to move in the slot 19 closer to the pivot 13 relatively soon and thus give a relatively short range of movement in the lever 10 in which a low pressure is induced in the cylinder 15.

In the present example, the ratio of the lengths of the first and second parts of the lever is established by test or calculation in conventional manner for the chosen application. The strength of the spring 25 is such that the roller 18 is displaced to the end of the slot 19 nearest the pivot 13 after a portion of its full stroke to be established by experimentation or calculation. The angle between the cam surface 19a and the longitudinal axis of the piston rod 17 varies over the length of the stroke.

Although a particular geometry of brake lever 10 and master cylinder 15 is shown in the attached drawings, it will be apparent that the invention as described herein may be applied to any other suitable geometry as desired.

In the present specification "comprise" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A brake pedal assembly comprising a master brake cylinder operable to supply fluid under pressure to a brake, the master brake cylinder comprising a piston connected to a rod, the brake assembly further comprising a lever mounted for manual movement about a pivot, first engagement means being provided on the rod and second engagement means being provided on the lever, the first engagement means and second engagement means being engaged such that the first engagement means is movable relative to the pivot of said lever.

2. A brake pedal assembly according to Claim 1 wherein the assembly comprises biasing means to bias the first engagement means to a biased position relatively distant from the pivot of said lever and the first engagement means is moveable to a position relatively close to the pivot of said lever.

3. An assembly according to Claim 1 or Claim 2 wherein one of said first engagement means and said second engagement means comprises a cam follower and the other of said first engagement means and said second engagement means comprises a cam surface.

4. A brake assembly according to Claim 3 wherein the cam follower comprises a roller.

5. A brake assembly according to Claim 4 or Claim 5 wherein the first engagement means comprises said cam follower and the second engagement means comprises said cam surface.

6. An apparatus according to any one of Claims 3 to 5 wherein the cam surface is disposed transverse to the plane of movement of the lever and is inclined to the longitudinal axis of the rod such that the cam surface has a first part which is relatively close to the master brake cylinder and a second part which is relatively distant from the master brake cylinder such that when the first engagement means is in its first position, the cam follower is disposed adjacent the first part of the cam surface and when the first engagement means is disposed is away from the biased position, the cam follower is disposed adjacent the second part of the cam surface.

7. An apparatus according to Claim 2 or any one of claims 3 to 6 where dependent directly or indirectly on Claim 2 wherein the first engagement means is displaced from its biased position by virtue of resistance of movement of said piston rod from fluid pressure within the master brake cylinder.

8. A brake assembly according to Claim 7 wherein the strength of the biasing means is selected such that said first engagement remains in its biased position during a first, low pressure movement phase and is displaced from the biased position during a second, high pressure movement phase.

9. A brake assembly according to Claim 7 or Claim 8 wherein the strength of the biasing means is selected such that where there is no resistance to movement of said rod from fluid pressure within the master cylinder, the first engagement means remains in its biased position.

10. A brake assembly according to Claim 9 wherein, where there is no resistance to movement of the rod due to fluid pressure within the master brake cylinder, the first engagement means remains in its biased position such that the rod may be moved over the whole of its full stroke.

11. A brake assembly according to Claim 9 and Claim 10 wherein, where there is a resistance to movement of the rod due to fluid pressure within the master brake cylinder, such that the first engagement means is displaced from its biased position, the rod may be moved only over a part of the length of the full stroke.

12. A brake assembly to any one of the preceding claims wherein the master brake cylinder is mounted for pivotal movement to permit movement of the first engagement means relative to the second engagement means.
